Europäisches Patentamt

European Patent Office

Office européen des brevets

(11) Publication number: **0 284 850 B1**

(12) # EUROPEAN PATENT SPECIFICATION

(45) Date of publication of patent specification: **17.06.92** (51) Int. Cl.⁵: **B01D 53/04**, B01J 20/16

(21) Application number: **88103729.5**

(22) Date of filing: **09.03.88**

(54) **Improved adsorptive purification process.**

(30) Priority: **09.03.87 US 23236**

(43) Date of publication of application:
**05.10.88 Bulletin 88/40**

(45) Publication of the grant of the patent:
**17.06.92 Bulletin 92/25**

(84) Designated Contracting States:
**AT BE CH DE ES FR GB GR IT LI LU NL SE**

(56) References cited:
**US-A- 3 078 635**
**US-A- 3 808 773**
**US-A- 3 885 927**

**D.M. Ruthven;"Principles of Adsorption and Adsorption Processes", John Wiley & Sons, New York, 1984, p. 14**

(73) Proprietor: **UOP**
**25 East Algonquin Road**
**Des Plaines, Illinois 60017-5017(US)**

(72) Inventor: **Pai, Jenny Lo**
**42 Arapaho Road**
**Brookfield, Connecticut 06805(US)**
Inventor: **Nifontoff, Olaf**
**150 Washburn**
**Stony Point, New York 10980(US)**
Inventor: **Clark, Keith Rendall**
**15052 Kimberly Lane**
**Houston, Texas 77079(US)**

(74) Representative: **Eggert, Hans-Gunther, Dr.**
**Räderscheidtstrasse 1**
**W-5000 Köln 41(DE)**

**Description**

1. Field of the Invention

The present invention relates in general to an improved process for drying and purifying gas streams by the selective adsorption and removal of impurities, preferably water and optionally one or more secondary impurities contained therein, such as carbon dioxide, sulfur dioxide, hydrogen sulfide and acetylenically unsaturated hydrocarbons, in a fixed bed of zeolitic molecular sieve adsorbent wherein the adsorbent bed is periodically regenerated by purge desorption using as the purge gas a non-sorbable gas stream at an entrance temperature of from 55°C to 100°C. Of critical importance to the process is the use of certain cationic forms of zeolite X which permit the use of low regeneration temperatures while increasing the efficiency of the adsorption purification or drying stage of the process cycle. Because it is necessary to raise the purge gas temperature only slightly above ambient, the energy required in this regard can readily be recovered from the heat of compression created in increasing the pressure of the feedstock gas stream to operating pressures.

2. Description of the Prior Art

It is well known in the art to dry or otherwise purify gas streams by selectively adsorbing water or other impurities therefrom using zeolitic molecular sieve adsorbents in a fixed adsorbent bed. It is conventional practice in such processes to carry out the cycle of (a) passing the impurity containing feedstock gas stream through the fixed bed, which initially contains activated zeolitic adsorbent, for a period not exceeding the time at which the effluent from the bed contains more than the desired concentration of impurity; (b) diverting the flow of feedstock from the bed and, countercurrently to the direction of flow of the feedstock through the bed, passing a stream of a relatively non-sorbable purge gas through the bed to remove feedstock constituents from the bed void space and, at an elevated temperature, continuing to pass the said purge gas through the bed to raise the temperature of the adsorbent mass above the temperature at which step (a) was carried out, whereby the adsorbed impurity is desorbed to a level commensurate with the degree of bed reactivation desired, and (c) cooling the bed to the temperature required for step (a) and repeating the cycle.

A process of this type is described in US-A-3,808,773 issued May 7, 1974 to J. Reyhing et al. In the specification the patentees point out that because of the very strong adsorptive affinity zeolitic molecular sieves have for the highly polar water molecules it is necessary to raise the temperature of this class of adsorbents during desorption (regeneration) higher than is required in the case of other adsorbents such as silica gel or activated carbon. Accordingly, it is further reported, the producers of zeolitic molecular sieves have historically recommended temperatures of 200°C - 300°C for purge-desorption regeneration of molecular sieves which have been employed for gas drying purposes, in order to remove a satisfactory amount of the adsorbed water. It is, moreover, generally perceived by those skilled in the art, that purge regeneration temperatures should not be below the boiling point of water at atmospheric pressure, i.e. 100°C, if a commercially feasible operation is to be achieved. Temperatures of from 100°C to 200°C are employed in the drying process of Reyhing et al. for the purge-desorption step, and with the precaution that the preceding adsorption-purification stroke be terminated upon the breakthrough of another and less readily sorbable impurity which must also be present in addition to the water impurity.

It has now been discovered, however, that in processes for purifying gas streams in fixed beds of zeolitic molecular sieves, it is possible and economically feasible to carry out the periodic purge-desorption of the adsorbent bed using non-sorbable purge gas streams at temperatures of less than 100°C, even when the impurity comprises water vapor. Temperatures as low as 55°C. have been found to be satisfactory Such is found to be the case whether or not there is a secondary and less sorbable impurity in the feedstock in addition to the water impurity.

US-A-3885927 discloses a process for selectively adsorbing carbon dioxide from gas streams comprising nitrogen and carbon dioxide by utilizing as the adsorbent a barium cation form of zeolite X.

Accordingly, it is the general object of the present invention to provide a process for the cyclic adsorptive purification, including drying, of gas streams in which the adsorbent has a higher capacity for the impurity adsorbates and also is capable of being regenerated at relatively low temperatures using reduced quantities of non-sorbable purge gas. Such a process can readily be carried out in existing conventional adsorption systems without further capital expenditure, and also without the need for increased quantities of non-sorbable gas.

It is another object to provide such a process wherein the heat energy imparted to the purge gas is derived from the heat of compression arising from compression of the purge gas stream or of another gas stream within the same process, or both.

3. Summary of the Invention

The above-stated objects as well as others which will be obvious from the specification appearing hereinafter are accomplished in the cyclic process for adsorptive purification which comprises the steps of:

(a) passing, at a temperature of less than 100°C., a feedstock gas stream comprising a major proportion of non-sorbable gas in admixture with an impurity component, preferably water or water in conjunction with one or more other and less readily adsorbable impurity constituents, through a fixed adsorption bed containing, in an activated state, a zeolitic molecular sieve adsorbent mass comprising zeolite crystals having the faujasite crystal structure, a framework Si/Al ratio of from 1.0 to 2.5, a cation equivalence of at least ninety percent (90%) with respect to divalent cation species having an ionic radius greater than that of the $Cd^{++}$ cation, and preferably greater than that of the $Ca^{++}$ cation, whereby said impurity component is selectively adsorbed on said adsorbent mass and a gas stream having a lower impurity content is recovered from said adsorption bed;

(b) terminating the passage of the feedstock into the absorption bed in step (a) prior to breakthrough of the impurity mass transfer front; and

(c) regenerating said adsorption bed at a temperature within the range of 55°C. to less than 100°C., preferably at least 70°C to less than 100°C and higher than that employed during step (a) by passing a purge gas, preferably a non-sorbable purge gas, stream substantially free of at least those impurities desired to be removed from the feedstock, through said bed in a direction opposite to the direction of flow in step (a) and for a period of time sufficient to desorb the desired amount of impurity from said adsorbent mass and flush same from the bed.

4. Description of the Drawings

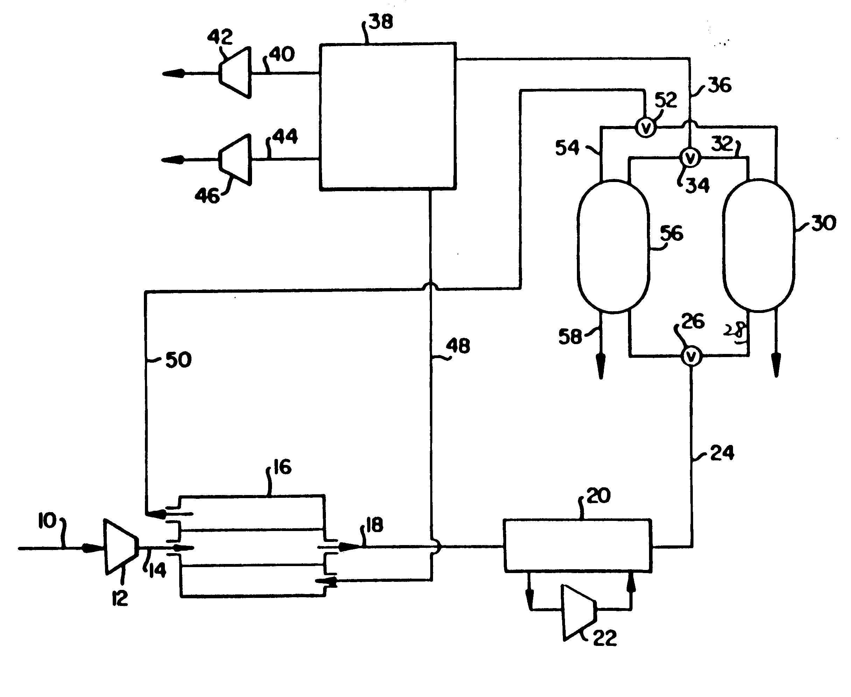

In the drawings, the figure is a schematic representation of a process system in accordance with one embodiment of the present invention wherein the temperature of the non-sorbable purge gas used to regenerate the adsorption bed is raised to above 70°C. using heat of compression resulting from increasing the pressure of the gas stream at some point in the process system.

5. Detailed Description of the Invention

In the description of the various embodiments of the invention, the various terms are employed herein in the same sense as commonly understood by those of routine skill in the art. Thus, for example, the term "activated state" as applied to the zeolitic molecular sieve adsorbent means that condition wherein the adsorbent mass exhibits the capacity to adsorb water, or one of the secondary impurities, from a feedstock gas stream passed thereover under the imposed conditions, to the degree necessary to obtain a product gas stream of the desired purity The term " non-sorbable" as applied herein to gases, including feedstock and purge gases, means those molecular species which because of molecular size, volatility or low degree of polarity are not significantly adsorbed on the zeolitic molecular sieve employed as the adsorbent under the imposed process conditions. Such materials include oxygen, nitrogen, hydrogen, the inert gases, methane carbon monoxide, and the like regardless of the pore size of the zeolitic adsorbent, and can of course include any molecular species for which the maximum dimension of their minimum projected cross section is larger than the effective pore diameter of the zeolitic adsorbent. The term "purge gas", which includes both sorbable and non-sorbable purge gases, does not include gases which are more strongly adsorbed than water vapor, or, if other impurities are to be removed from the feedstock in addition to water, more strongly adsorbed than the least sorbable of those impurity constituents. With respect to purge gas streams employed herein, such gas streams are termed "substantially impurity-free" if they are capable of desorbing the particular impurity or impurities loaded on the adsorption bed during bed regeneration to the degree that the product gas stream obtained during the post-regeneration adsorption-purification cycle contains no more than the desired level of the said impurity or impurities. In the case in which water is an impurity, the purge gas stream is, advantageously, bone dry, i.e., contains less than about 10 ppm (v) water vapor, but much higher concentrations of water vapor can be acceptable in particular process applications, the maximum concentration permissible being readily determined using well-known technology by those of routine skill in the art. The same considerations apply to the impurity content of the purge gas stream when impurities other than or in addition to water are involved.

The concentration of the impurity in the feedstocks suitably treated by the present process is not a critical factor and can range from saturation under the imposed adsorption-purification conditions down to the level of capability of the zeolite adsorbent to effect a decrease in the impurity concentration of the feedstock upon passage through the adsorbent bed.

The principal components of the feedstocks include, but are not limited to air, oxygen, hydrogen, nitrogen, helium, neon, argon and methane, and can contain as impurities in addition to or instead of water, such sorbable materials as carbon dioxide, hydrogen sulfide, ammonia, nitrogen oxides, sulphur dioxide and olefinically and acetylenically unsaturated hydrocarbons.

The zeolitic molecular sieve adsorbent employed in the present process. is a zeolite having a faujasite type of crystal structure and having a framework Si/Al ratio of 1.0 to 2.5 and having a cation equivalence of at least ninety percent (90%), preferably at least ninety-five percent (95%) with respect to divalent cation species having an ionic radius greater than the ionic radius of the $Cd^{++}$ cation. Such cations include $Ca^{++}$, $Sr^{++}$ and $Ba^{++}$. The divalent strontium cation and the divalent barium cation are preferred cation species, with the barium cation being especially suitable for purposes of the present invention. The preferred zeolite of the faujasite type for use in the present invention is zeolite X, disclosed and described in detail in US-A-2,882,244 issued April 14, 1959 to R. M. Milton.

As used herein, the term cation equivalence means the molar ratio $M_{2/n}O/Al_2O_3$ wherein "M" represents a cation associated with and balancing the net negative charge on a framework $AlO_2^-$ tetrahedron of the zeolite, and "n" is the valence of the cation. In the case of monovalent cations, the ratio has a value of 1.0 in an ideal zeolite crystal, but in the case of polyvalent cations the value can exceed 1.0 due to the possibility that the $AlO_2^-$ distribution in the crystal lattice is such that not all can share a charge balancing cation, or less than the number of $AlO_2^-$ tetrahedral units equal to the available cation charge can share a single cation.

While the temperature at which the adsorption-purification step is carried out should be lower than the temperature at which the purge regeneration is accomplished, i.e., 100°C., the minimum temperature is not critical provided it is sufficiently high to maintain the feedstock in the vapor phase at the operating pressures which can range from subatmospheric to 208 bar (3,000 psig) or higher. Preferably the adsorption-purification step is carried out at a temperature within the range of 5°C. to 50°C. at a pressure of atmospheric to 173 bar (2,500 psig).

The adsorption stage of the cyclic process is terminated upon the breakthrough of the least strongly adsorbed of the impurities sought to be removed from the feedstock. Thereafter the countercurrent purge regeneration is carried out with a purge gas of appropriate purity. Suitable purge gases include but are not limited to hydrogen, neon, helium, nitrogen and methane.

In the broad application of the present invention it is not at all critical what is the source of the heat energy used to provide a regeneration purge gas stream at a temperature of 55°C. to 100°C., preferably 70°C. to 95°C. In an especially advantageous embodiment of the invention, however, it has been found that the heat generated by compressing a gas stream in some phase of the overall process involving the purification operation is often sufficient to heat the purge gas stream to the necessary temperature of between 55°C. and 100°C. Commonly the feedstock to be dried or otherwise purified and optionally further processed, is compressed from ambient pressure up to several atmospheres followed by cooling in order to condense out a portion of the starting water content, and/or to increase the vapor pressure of other impurity components of the feedstock to the adsorption drying beds with a consequent increase in the adsorption capacity of the zeolitic adsorbent for such other impurities. The heat energy removed from the pressurized feedstocks in the compressor after-cooler has heretofore been substantially wasted since it is normally too low in intensity to be utilized elsewhere. For purposes of the present process, however, this heat of compression is recovered substantially by heat-exchanging the compressed feedstocks with the available low-temperature purge gas, and while only relatively modest increases in the purge gas temperature can be accomplished, such temperature elevation is frequently sufficient for the process of the present invention. Other sources of available heat energy resulting from the compression of gases can be present in other phases of the overall process. For example, if refrigeration apparatus is employed, the heat produced by compressing the refrigerant is a possible source of heat for the purge gas. Also if one of the product gas streams is to be pressurized for storage or pipeline transmission, this heat of compression can be similarly utilized.

The pressure of the purge gas stream passing through the adsorption bed during the purge desorption step is within the range of 0,07 (1) to 6,9 bar (100 psia).

4. Description of the Drawings

In the drawings, the figure is a schematic representation of a process system in accordance with one embodiment of the present invention wherein the temperature of the non-sorbable purge gas used to regenerate the adsorption bed is raised to above 70°C. using heat of compression resulting from increasing the pressure of the gas stream at some point in the process system.

In order to illustrate the broad aspect as well as a specific embodiment of this invention, the following description with references to the figure of the drawing is provided in which the objective is the purification, by the removal of water and carbon dioxide, of an air stream which is to be further subjected to a cryogenic separation. With reference to the drawing, feedstock ambient air containing 370 ppm (v) of carbon dioxide and saturated with water vapor enters the system through line 10 at a temperature of about 37°C. and 1,01 bar (zero psig), and is compressed to a pressure of 7,9 bar (100 psig) in compressor 12. As a result of this pressurization, the temperature of the feedstock is raised to 93°C.. From the compressor 12 the gas stream passes through line 14 and enters heat exchanger 16 at a temperature of about 88°C.. In the course of passage through heat exchanger 16, the temperature is decreased to about 38°C. and is discharged through line 18 to chiller 20 containing refrigerant compressor 22. Condensed water is removed prior to the passage of the gas stream from chiller 20 and the effluent therefrom is at a pressure of 7,2 bar (90 psig) and a temperature of about 5°C. The effluent is saturated with water vapor and contains essentially all of the original carbon dioxide content, and is passed through line 24, valve 26, and line 28 to adsorbent bed 30 containing as the adsorbent, trilobal-shaped pellets of a 90 equivalent per cent strontium exchanged zeolite X. Flow through bed 30 is continued until the carbon dioxide mass transfer front, formed by the adsorption of carbon dioxide from the gas stream, approaches the egress end of bed 30, but prior to breakthrough of that front. The water impurity being much more strongly adsorbed than the carbon dioxide, the water mass transfer front will be between the ingress end of the bed and the carbon dioxide mass transfer front. The dry and carbon dioxide free effluent air stream from bed 30 passes through line 32, valve 34 and line 36 to cold box 38 wherein liquefaction and distillation occur as the means of separating the nitrogen and oxygen from admixture and producing essentially pure components. The pure oxygen is passed out of the separation unit 38 through line 40 and is compressed in compressor 42 for removal from the system and storage. Conventionally at least a portion of the pure nitrogen product is vented to the atmosphere for commercial reasons, and is thus a waste gas stream. The marketable nitrogen is passed out of the system through line 44 and compressor 46. In the present process, a stream of the waste nitrogen is fed from cold box 38 at a temperature of about 5°C. and a pressure of 1,7 bar (10 psig) through line 48 to heat-exchanger 16 wherein it is heated by the incoming feedstock to a temperature of about 79°C. and is thereafter passed through line 50, valve 52 and line 54 to the bottom of adsorbent bed 56. Bed 56 contains the same adsorbent as in bed 30 and on the previous cycle has been used to dry the feedstock passing through line 24. Accordingly the bed contains a loading of adsorbed water and carbon dioxide and requires regeneration before again being utilized for adsorption-purification. The dry nitrogen stream, even though it is only at a temperature of about 79°C., is found to be suitably employed as the purge gas to desorb the water from bed 56. Desorbed water and carbon dioxide is passed out of the system through line 58.

It is to be noted that in the system described immediately above, the direction of the flow of the feedstock through the bed during the adsorption purification step is upward and that in the purge desorption step, the flow of the purge gas stream is downward through the bed. This is believed to be the best mode for carrying out the processes of the present invention involving the removal of water as an impurity, since it can enhance removal of condensed liquid water due to gravity during purge desorption.

Although not utilized in the process embodiment set forth above, compressors 22, 42 and 46 all produce heat which can be used to heat a purge gas stream to the relatively low levels required. The purge gas need not be nitrogen or even be derived from the process system which is in operation. The invention is further illustrated and the advance in the art provided by the present process clearly demonstrated by the following comparative example in which a polyvalent metal exchanged form of zeolite X is compared to a conventional sodium cation form of zeolite X in the process for removing water vapor and carbon dioxide from an air stream. In the procedure, two fixed adsorption beds were employed. Unit #1 containing about 3422 kg (7545 lbs.) of a barium exchanged zeolite X containing a cation equivalence of barium cations of greater than ninety-five percent (95%) and having a framework Si/Al ratio of 1.25. Unit #2 contained essentially the same volume of sodium zeolite X having the same framework Si/Al ratio. In each of the units, air containing 145 ppm water vapor and 350 ppm carbon dioxide was passed upward through the bed at the rate of about 17415 $m^3/h$ (615,000 $ft^3/hr$) at 6,8 bar (98 psia) and at a temperature of 5°C. The adsorption-purification step was terminated in each case just prior to breakthrough of 0.5 ppm carbon dioxide. Thereafter the bed was regenerated countercurrently using a dry nitrogen purge gas, and then returned to the adsorption mode wherein the same feedstock composition was purified until the same degree of carbon dioxide breakthrough occurred. The regeneration time for Unit #1 was equal to the adsorption time for Unit #2 and vice versa during the cycles at each of the temperature conditions specified. In all, six different process cycles were carried out - - three in each unit, wherein different regeneration temperatures and purge gas flow rates were employed. Each cycle in one unit was duplicated in the other unit. The results are shown in tabular form below:

TABLE I

| Regeneration Temp., °C. | Purge Gas $m^3$/h Flow Rate, (ft3/hr) | Breakthrough Times, h (hrs) | |
|---|---|---|---|
| | | Unit #1 (BaX) | Unit #2(NaX) |
| 288 | 1699 (60,000) | 14.75 | 8.42 |
| 163 | 2124 (75,000) | 13.78 | 7.63 |
| 82 | 2492 (88,000) | 10.90 | 6.70 |

The results reported above clearly establish the following facts:

(a) Both adsorbents can be regenerated with low level energy.

(b) The lower the regeneration temperature the shorter the adsorption purification step due to the presence of higher levels of residual impurities on the regenerated bed.

(c) The breakthrough time for the adsorbent containing the polyvalent cations in accordance with the present invention, when regenerated at only 82°C, is still significantly longer than the breakthrough time for the conventional zeolite 13X after regeneration at 288°C. Among other things, this means that a lesser quantity of the polyvalent metal zeolite X adsorbent is required for the same amount of $CO_2$ purification than in the case of conventional 13X. in the particular instance demonstrated above, this results in purge gas savings of the order of 40 percent.

It will be apparent to those of ordinary skill in the art that various modifications can be made of the present invention without departing from the proper scope thereof.

## Claims

1. Process for adsorptive purification of vapor phase feedstocks which comprises the steps of:

(a) passing, at a temperature of less than 100°C., a feedstock gas stream comprising a major proportion of non-sorbable gas in admixture with an impurity component through a fixed adsorption bed containing, in an activated state, a zeolitic molecular sieve adsorbent mass comprising zeolite crystals having the faujasite crystal structure, a framework Si/Al ratio of from 1.0 to 2.5, a cation equivalence of at least ninety percent with respect to divalent cation species having an ionic radius greater than the $Cd^{++}$ cation, whereby said impurity component is selectively adsorbed on said adsorbent mass and a gas stream having a lower impurity content is recovered from said adsorption bed;

(b) terminated the passage of the feedstock into the adsorption bed in step (a) prior to breakthrough of the impurity mass transfer front; and

(c) regenerating said adsorption bed at a temperature within the range of 55 C. to less than 100°C and higher than that employed during step (a) by passing a purge gas, stream substantially free of at least those impurities desired to be removed from the feedstock, through said bed in a direction opposite to the direction of flow in step (a) and for a period of time sufficient to desorb the desired amount of impurity from said adsorbent mass and flush same from the bed.

2. Process according to claim 1 wherein the divalent cation species has an ionic radius greater than the ionic radius of $Ca^{++}$.

3. Process according to claim 2 wherein the divalent cation is strontium.

4. Process according to claim 2 wherein the divalent cation is barium.

5. Process according to claim 1 to 4 wherein the temperature of the purge gas is 70°C to 100°C.

6. Process according to claim 1 to 5 wherein the purge gas is a non-sorbable purge gas.

**7.** Process according to claim 1 wherein the impurity component comprises water vapor.

**8.** Process according to claim 7 wherein the impurity component comprises water vapor and carbon dioxide.

**9.** Process according to claim 7 wherein the direction of flow of the purge gas in step (c) is downward through the adsorbent bed.

**10.** Process according to claim 7 wherein the purge gas is brought to the temperature of 55°C. to 100°C. by using the heat of compression of another gas phase within the same process system.

**11.** Process according to claim 10 wherein the feedstock is air containing from greater than 0.1 ppm (v) to the saturation level of water vapor and the purge gas stream is nitrogen separated from said feedstock.

**12.** Process according to claim 11 wherein the nitrogen purge gas is heated to 55°C. to 100°C. by heat exchange with the air feedstock, the initial temperature of said air feedstock being greater than the final temperature of the purge gas by virtue of being compressed.

**Revendications**

**1.** Procédé de purification, par absorption, de matières de départ en phase vapeur, qui comprend les opérations consistant :

(a) à faire passer, à une température inférieure à 100 °C, un courant de gaz, constituant la matière de départ et comprenant une proportion majeure de gaz non absorbable en mélange avec un composant formant une impureté, à travers un lit fixe d'absorption contenant, à l'état actif, une masse absorbante formée d'un tamis moléculaire de nature zéolithique, comprenant des cristaux de zéolithe possédant la structure du cristal de faujasite, un rapport de réseau Si/Al de 1,0 à 2,5, une équivalence de cation d'au moins quatre-vingt-dix pour cent par rapport à l'espèce de cation divalent ayant un rayon ionique supérieur à celui du cation $Cd^{++}$, de sorte que le composant formant une impureté est absorbé d'une manière sélective sur la masse absorbante et qu'un courant de gaz possédant une teneur plus faible en impuretés est récupéré à partir du lit d'absorption,

(b) à arrêter le passage de la matière de départ dans le lit d'absorption, conforme à l'opération (a), avant que le front de transfert de masse de l'impureté ne franchisse l'extrémité du lit et

(c) à régénérer le lit d'absorption, à une température comprise entre 55 °C et moins de 100 °C et supérieure à celle employée au cours de l'opération (a), en faisant passer, à travers le lit, un courant de gaz de purge, ce courant étant pratiquement exempt d'au moins les impuretés que l'on souhaite être extraites de la matière de départ, ce passage ayant lieu dans un sens opposé au sens d'écoulement de l'opération (a) et pendant une période de temps suffisante pour réaliser la désorption de la quantité voulue d'impuretés à partir de la masse absorbante et pour la chasser hors du lit.

**2.** Procédé suivant la revendication 1, selon lequel l'espèce de cation bivalent a un rayon ionique supérieur au rayon ionique de $Ca^{++}$.

**3.** Procédé suivant la revendication 2, selon lequel le cation bivalent est le strontium.

**4.** Procédé suivant la revendication 2, selon lequel le cation bivalent est le baryum.

**5.** Procédé suivant l'une des revendications 1 à 4, selon lequel la température du gaz de purge est de 70 °C à 100 °C.

**6.** Procédé suivant l'une des revendications 1 à 5, selon lequel le gaz de purge est un gaz de purge non absorbable.

**7.** Procédé suivant la revendication 1, selon lequel le composant formé d'impuretés comprend de la vapeur d'eau.

**8.** Procédé suivant la revendication 7, selon lequel le composant formé d'impuretés comprend de la vapeur d'eau et du gaz carbonique.

**9.** Procédé suivant la revendication 7, selon lequel le sens de l'écoulement du gaz de purge dans l'opération (c) est dirigé vers le bas à travers le lit absorbant.

**10.** Procédé suivant la revendication 7, selon lequel le gaz de purge est amené à la température de 55 ° C à 100 ° C en utilisant la chaleur de compression d'une autre phase gazeuse se trouvant dans le même procédésystème.

**11.** Procédé suivant la revendication 10, selon lequel la matière de départ est de l'air contenant de la vapeur d'eau en une quantité comprise entre une valeur supérieure à 0,1 ppm (en volume) et le niveau de saturation et le courant de gaz de purge est de l'azote séparé de la matière de départ.

**12.** Procédé suivant la revendication 11, selon lequel la température du gaz de purge, constitué d'azote, est portée à 55 ° C à 100 ° C par échange de chaleur avec la matière de départ, formée d'air, la température initiale de la matière de départ formée d'air étant supérieure à la température finale du gaz de purge du fait qu'elle est comprimée.

**Patentansprüche**

**1.** Verfahren zur adsorptiven Reinigung von Ausgangsmaterialien in der Dampfphase, das die Schritte umfaßt:

(a) Durchleiten eines Gasstromes des Ausgangsmaterials, der einen größeren Anteil eines nicht-sorbierbaren Gases im Gemisch mit einer Verunreinigung enthält, bei einer Temperatur von wenigstens 100 ° C, durch ein festes Adsorptions-Bett, das im aktivierten Zustand eine zeolitische Molekularsieb-Adsorbensmasse und Zeolitkristalle mit Faujasitstruktur, einem Si/Al-Verhältnis von 1,0 bis 2,5 und einer Kationenäquivalenz von wenigstens 90% bezogen auf zweiwertige Kationen mit einem Ionenradius, größer als der des $Cd^{++}$ Kations, enthält, wobei die Verunreinigungen selektiv an der Adsorbensmasse adsorbiert werden und ein Gasstrom mit einem niedrigeren Gehalt an Verunreinigungen von dem Adsorptionsbett abgezogen wird;

(b) Beendigung der Durchleitung des Ausgangsmaterials in das Adsorptionsbett gemäß Schritt (a) vor Durchbruch der Front der Verunreinigungen; und

(c) Regenierung des Adsorptionsbettes bei einer Temperatur im Bereich von 55 ° C bis weniger als 100 ° C, die höher als die im Schritt (a) ist, mittels Durchleiten eines Spülgasstromes, der weitgehend frei von wenigstens den Verunreinigungen ist, die aus dem Ausgangsmaterial entfernt werden sollen, durch das Bett in entgegengesetzte Richtung zur Strömungsrichtung des Schrittes (a) über einen Zeitraum, der ausreicht, um die gewünschte Menge der Verunreinigungen von der Adsorbensmasse zu desorbieren und aus dem Bett zu spülen.

**2.** Verfahren nach Anspruch 1, bei dem die zweiwertige Kationenart einen Ionenradius hat, der größer als der Ionenradius von $Ca^{++}$ ist.

**3.** Verfahren nach Anspruch 2, bei dem das zweiwertige Kation Strontium ist.

**4.** Verfahren nach Anspruch 2, bei dem das zweiwertige Kation Barium ist.

**5.** Verfahren nach einem der Ansprüche 1 bis 4, bei dem die Temperatur des Spülgases 70 bis 100 ° C beträgt.

**6.** Verfahren nach einem der Ansprüche 1 bis 5, bei dem das Reinigungsgas ein nicht-sorbierbares Gas ist.

**7.** Verfahren nach Anspruch 1, bei dem der Verunreinigungsanteil Wasserdampf enthält.

**8.** Verfahren nach Anspruch 7, bei dem der Verunreinigungsanteil Wasserdampf und Kohlendioxid enthält.

**9.** Verfahren nach Anspruch 7, bei dem die Strömungsrichtung des Spülgases in Schritt (c) abwärts durch das Adsorptionsbett verläuft.

**10.** Verfahren nach Anspruch 7, bei dem das Spülgas durch Nutzung der Kompressionswärme einer anderen Gasphase innerhalb desselben Verfahrenssystems auf eine Temperatur von 55 bis 100°C gebracht wird.

**11.** Verfahren nach Anspruch 10, bei dem das Ausgangsmaterial über 0,1 ppm (v) Luft bis zum Sättigungsbereich von Wasserdampf enthält und der Spülgasstrom vom Ausgangsmaterial abgetrennter Stickstoff ist.

**12.** Verfahren nach Anspruch 11, bei dem das Stickstoffspülgas auf 55 bis 100°C durch Wärmeaustausch mit der zugeführten Luft erhitzt wird, wobei die Ausgangstemperatur der zugeführten Luft größer als die Endtemperatur des Reinigungsgases aufgrund seiner Kompression ist.